# EUROPEAN PATENT SPECIFICATION

(11) **EP 0 426 221 B1**
(45) Date of publication and mention of the grant of the patent: **05.01.1994**
(21) Application number: 90202730.9
(22) Date of filing: 15.10.1990
(51) Int. Cl.: H01S 3/06, H01S 3/094, H04B 10/12

(54) **Low-noise optical amplification unit with reflection of the pumping power**
Optische Verstärkungseinrichtung mit niedrigem Rauschen und Reflexion der Pumpleistung
Dispositif d'amplification optique à faible bruit avec réflexion de la puissance de pompage

(30) Priority: 30.10.1989 IT 2219689
(43) Date of publication of application: 08.05.1991
(73) Proprietor: PIRELLI CAVI S.p.A., 20123 Milano (IT)
(72) Inventor: Grasso, Giorgio, I-20052 Monza (Milano) (IT); Righetti, Aldo, I-20146 Milano (IT); Fontana, Flavio, I-20032 Cormano (Milano) (IT)
(74) Representative: Marchi, Massimo, Dr.

(56) References cited:
- EP-A- 0 143 561
- US-A- 4 782 491
- 14TH ECOC '88, September 1988, pages 25-27; R.I. LAMING et al.: "Optimal pumping of erbium-doped-fibre optical amplifiers"
- IEEE PHOTONICS TECHNOLOGY LETTERS, vol. 1, no. 9, September 1989, pages 267-269; P.C. BECKER et al.: "High-gain and high-efficiency diode laser pumped fiber amplifier at 1.56 mum"

## Description

The present invention relates to an optical amplifier for optical fiber telecommunication lines, and more particularly to an optical preamplifier having high efficiency intended as a gain with respect to the input pumping power, and a low-noise figure.

In the field of telecommunication lines optical fibers have been recently introduced in which a modulated signal light is input; said optical systems are particularly convenient, above all due to the fact that optical fibers can transmit a signal over high distances with very reduced attenuations.

In order to further increase the signal transmission distance, optical amplifiers are already known which are provided with a portion of a so-called "active" fiber into which luminous "pumping" energy of a lower wavelength than the signal energy is fed, which pumping energy causes inside the active fiber a transition to the state of laser emission of the dopants present therein; the presence of a signal having a wavelength corresponding to said laser emission state gives rise to a decay of the dopant atoms from the laser state to a base state, which is associated with a light emission consistent with the signal, thus causing the amplification thereof.

Said optical amplifiers allow a signal amplification to be achieved in the fiber without resorting to electronic apparatus which need the signal to be transformed from optical to electrical, then electrically amplified and again converted to an optical signal, thereby introducing into the telecommunication line all limitations proper to the electronic apparatus used and in particular restricting the transmission frequency.

For their operation, optical amplifiers need a source of pumping light of a particular wavelength, lower than the transmission one, which is introduced into the fiber carrying the signal through a dichroic coupler or optical multiplexer and diffuses within the active fiber with an increasing attenuation of its luminous power in the fiber length, mainly due to the transfer of energy to the dopants excited in the laser emission state.

Therefore the luminous pumping power, responsible for the amplifier gain, gradually decreases within the active fiber, so that the exploitation of the active fiber properties becomes increasingly lower over the length thereof.

The minimum luminous power which is requested for each section of active fiber so that an amplification gain can be reached is designed as threshold power, above which a population inversion takes place, that is there is a higher number of atoms in the excited laser emission state than in the base state and therefore the signal photons can cause a transition from the laser emission state to the light emission base state, thus giving rise to a gain.

On the contrary, when the luminous power is lower than the threshold power, the atomic population is higher in the base state and the signal photons are very likely to cause by themselves a transition to the excited state, so that a signal attenuation occurs instead of a gain.

Since there is also the possibility of spontaneous decays from the excited state to the base state with a light emission independent of the signal, defined as "noise", in the presence of low gains, that is with a pumping power slightly higher than the threshold power, there is a low signal-to-noise ratio which impairs the transmission quality; in fact, when the pumping power values are near the threshold values that is in a condition of reduced population inversion, a greater number of atoms are subjected to spontaneous decay with respect to those in which a stimulated transition giving origin to a gain occurs: as a result therefore there is a worsening in the signal-to-noise ratio.

On account of this phenomenon, the active fiber is selected of a remarkably lower length than the length corresponding to the achievement of the threshold power at its end section.

In this manner however part of the pumping power is unused so that the amplifier efficiency is restricted and in addition, since this power diffuses in the transmission fiber downstream of the amplifier, it can give rise to disadvantages, in particular when the described amplifier is a preamplifier at the end of a transmission line, connected to receiving electronic apparatus.

It is therefore necessary to accomplish an optical amplifier having a reduced "noise figure", that is having the maximum output signal-to-noise ratio and capable of eliminating the unused pumping power at the amplifier output.

Consequently the present invention aims at providing an optical active-fiber amplifier, of the above described type, exhibiting high efficiency with respect to the pumping power and capable of achieving the maximum exploitation of the active fiber, while keeping the pumping power value substantially constant over the whole length thereof and at the same time avoiding the propagation of the pumping light beyond the active fiber itself.

The present invention is defined in claim 1. Embodiments of the invention are set out in the dependent claims. An optical amplifier corresponding to the preamble of claim 1 is known from IEEE Photonics Technology Letters, vol.1, no.9, September 1989, pages 267-269.

It is therefore an object of the present invention an optical amplifier of the active-fiber type, adapted to be connected to an optical fiber in an optical telecommunication system, which amplifier comprises a portion of active optical fiber containing a laser-emitting substance, susceptible of being connected to the telecommunication optical fiber and receiving light therefrom at the transmission wavelength, further fed from a light source at a pumping wavelength lower than the transmission one, which pumping light can be absorbed in the active fiber, characterized in that the active fiber has a length corresponding to a partial absorption of the directly-input pumping light and in that downstream of the active fiber a selective mirror element is present, which reflects the light at the pumping wavelength and is transparent to the light at the transmission wavelength.

The mirror element has a reflectivity within the active fiber lower than -40 dB at the transmission wavelength and higher than -10 dB at the pumping wavelength.

According to one embodiment of the invention, the mirror element consists of discrete components comprising a dichroic mirror and two focusing groups respectively adapted to send light from the active fiber to the dichroic mirror and from the dichroic mirror to the telecommunication optical fiber.

Alternatively, the mirror element consists of one or more monolithic optical fiber elements.

In a preferred embodiment the mirror element consists of an optical demultiplexer having an input fiber connected to the end of the active fiber and adapted to receive the transmission wavelength and the pumping wavelength multiplexed in a single fiber and two output fibers, the demultiplexer being adapted to separate the transmission wavelength on one of the output fibers and the pumping wavelength on the other output fiber, the output fiber carrying the transmission wavelength being connected to the communication fiber and the output fiber carrying the pumping wavelength being provided, at the end thereof, with a mirror adapted to reflect at least the pumping wavelength.

Conveniently, in this embodiment the mirror is a dichroic mirror having a reflectivity lower than -20 dB at the signal wavelength and a reflectivity higher than -5 dB at the pumping wavelength and the demultiplexer has an isolation higher than -10 dB between the transmission and pumping wavelengths.

More details will appear from the following description of a preferred embodiment of the invention, with reference to the accompanying drawings, in which:
- Fig. 1 shows the diagram of an optical amplifier according to the known art;
- Fig. 2 is a diagram showing the variation of the pumping power and of the corresponding amplification gain in the active fiber length of the amplifier in Fig. 1;
- Fig. 3 shows the diagram of an optical amplifier in accordance with the invention, comprising a reflective unit;
- Fig. 4 is a diagram of the amplifier shown in Fig. 3, according to a particular embodiment;
- Fig. 5 is a diagram showing the variation of the pumping power and of the corresponding amplification gain in the active fiber length of the amplifier in Fig. 3.

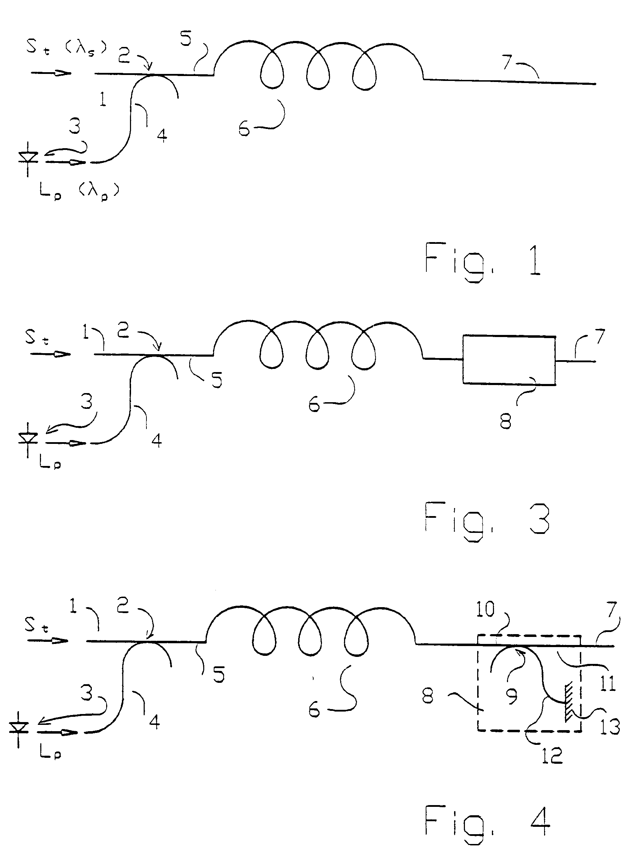

The structure of an optical amplifier of the active-fiber type is diagrammatically shown in Fig. 1 in which 1 denotes a telecommunication optical fiber, to which a transmission signal Sₜ of a s wavelength is sent; as said signal attenuates after a certain length of fiber 1, for the purpose of being amplified it is sent to the input of a dichroic coupler 2, or optical multiplexer, of a type known per se, where it is joined to the pumping light Lₚ of a p wavelength, generated by a pumping laser emitter 3 and sent to the input of the coupler 2 through a respective fiber 4; the two wavelengths coupled on the same fiber 5 coming out of the dichroic coupler 2 are therefore input into an active fiber 6.

In the active fiber 6, in the presence of the luminous pumping power, a light emission occurs which is stimulated at the s wavelength thus amplifying the transmission signal Sₜ sent thereto; the transmission signal is then introduced into the transmission fiber 7 and it goes on towards its destination which can be either another portion of optical cable or a terminal receiving apparatus.

In the first case the amplifier is defined as a line amplifier, whereas in the second case the assembly is defined as a "preamplifier", that is a device adapted to raise the intensity of the optical signal at the end of a transmission line before its conversion to an electrical signal.

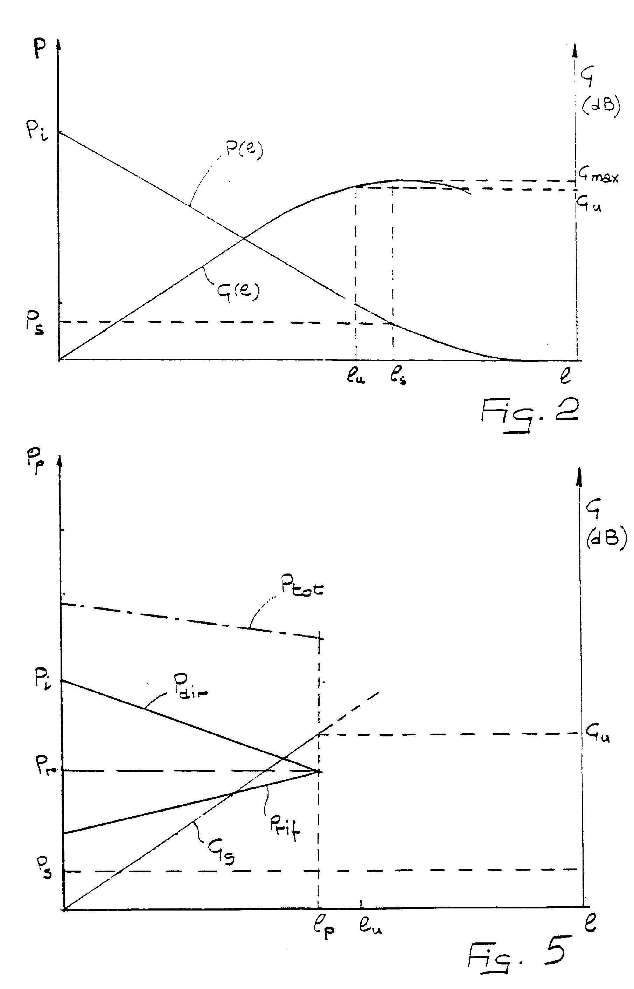

As shown in Fig. 2, the luminous pumping power P within the active fiber decreases as the length of fiber 1 increases and has a substantially linear development starting from the input value Pᵢ, because it is in turns absorbed by the fiber, so that dopants contained therein are brought to the laser emission state.

After passing a portion 1ₛ of active fiber the pumping power at the inside thereof reaches the saturation power value Pₛ, under which value the energy distribution within the fiber is such that it does not cause a transmission signal amplification, that is a gain, but an attenuation of said signal due to the transition to an excited state of the active substances of the fiber, to the detriment of the signal luminous energy itself.

The qualitative development of the gain G depending upon the length of the active fiber is shown in Fig. 2: as viewed from the diagram, for fiber lengths close to the saturation length 1ₛ the gain exhibits a very small increase, up to the value Gₘₐₓ, whereas for fiber lengths higher than 1ₛ a gain decrease occurs.

For practical purposes therefore a fiber length 1ᵤ lower than 1ₛ is used in order to have a sufficient gain Gᵤ for the signal, with the introduction of the minimum noise caused by spontaneous transitions from the laser emission state to the base state.

Noise in fact is proportional to the atomic population present in the upper laser level and decreases less quickly than the gain along the fiber as the pumping power decreases in the fiber itself.

As shown in the diagram in Fig. 2, in an active fiber the maximum pumping power Pᵢ determining the maximum achievable gain per fiber length unit takes place only in the initial area of the fiber itself, whereas subsequently the pumping power becomes remarkably lower, which brings about a reduced exploitation of the available active fiber length for amplification purposes, as emphasized by the gain diagram represented in Fig. 2.

In the case of a preamplifier, that is an amplifier located at the end of an optical line, immediately upstream of a receiving and optical-to-electrical signal transforming member, it is possible to achieve an increase in the reception responsiveness when the noise of the preamplifier is lower than the noise of the receiving apparatus.

Since the amplifier noise is proportional to its gain, there is a gain value for which the two noise contributions are the same; this one is the maximum gain value to be used in a preamplifier for the purpose of improving the responsiveness on reception.

Adopting higher preamplification gains, on the other hand, can be convenient for different reasons, in order to use less expensive apparatus downstream of the preamplifier for example, without adversely affecting the signal receiving responsiveness.

When optical amplifiers are employed as preamplifiers therefore, it is used a fiber length capable of supplying a pumping power P at the fiber end which gives rise to an overall gain of the same level as the increase of responsiveness.

In accordance with the present invention, as shown in Fig. 3, in an amplification unit comprising a dichroic coupler 2, a pumping laser 3 and an active fiber 6, a selective (or dichroic) mirror element 8 is provided downstream of the active fiber 6, adapted to reflect the pumping wavelength p letting the transmission wavelength s pass inaltered.
Connected to the output of the mirror element 8 is the transmission fiber 7 carrying the amplified signal and designed to transmit it to its destination.

The mirror element 8, as shown in the diagram of Fig. 5, reflects the residual pumping power Pᵣ present at the end of a portion 1ₚ of active fiber 6, backwards within the active fiber, so that the reflected power P_{rif} is added to the pumping power P_{dir} directly emitted from laser 3, thus giving a value of the pumping power in the active fiber, which value goes high, almost constant or decreasing with a reduced slope over the whole length of the active fiber used, as shown in dash-dot line Pₜₒₜ in the figure.

It is therefore possible to keep a high population inversion value in the whole fiber, which involves an improved gain, the noise generated by the amplifier being equal.

The mirror element 8 can be made in "microoptics" by the use of a selective mirror formed with a suitably treated plate reflecting the sole pumping wavelength, equipped with lens-focusing members or the like, adapted to convey the light from the optical fiber to the mirror and from the mirror again to the optical fiber upstream of the mirror, over the reflected wavelength, and to the transmission fiber downstream of the mirror over the passing wavelength; alternatively it is possible to make the mirror element in a monolithic form, using the same transmission optical fiber or several optical fibers, which brings about advantages from the point of view of the assembly stability.

According to a convenient embodiment of the invention, shown in Fig. 4, the mirror element 8 consists of a second dichroic coupler 9, or optical demultiplexer, having an input fiber 10 and two output fibers 11, 12, in which transmission s and pumping p are respectively separated.

Connected to the output fiber 11 is the transmission optical fiber 7 downstream of the amplifier, whereas a mirror 13 is applied to the end of fiber 12.

As known in the field, by demultiplexer it is meant an optical element adapted to receive light having two different wavelengths on a sole input fiber and to emit the same wavelengths separated on two outgoing fibers.

A real optical demultiplexer or decoupling device, in the same manner as a multiplexer or dichroic coupler, has a certain degree of separation between the output wavelengths, that is a small fraction of the transmission signal can be found on the demultiplexer branch 12; such a signal, once it has been reflected by the mirror 13, could be dangerous in the transmission line and in the optical fiber, because it would be amplified as well and could give rise to interference phenomena with the transmission signal.

Therefore, should the demultiplexer input a low degree of isolation between the wavelengths, that is lower than 20 dB, provision will be made for the arrangement of a dichroic-type mirror 13, that is a mirror having a reduced reflectivity at the transmission wavelengths, lower than -20 dB, so that in the mirror element 8 formed in this embodiment with the demultiplexer 9 and the dichroic mirror 13, there will be an overall isolation at all events greater than 40 dB, at the wavelength s.

It is to be pointed out that the light at the wavelength s passes twice through the demultiplexer, before and after the reflection: therefore the demultiplexer isolation acts twice in restricting the luminous power of wavelength s reflected by the mirror and input into the fiber 6 and consequently in the transmission line.

Should the demultiplexer have a degree of isolation higher than 20 dB, said demultiplexer will be sufficient to ensure the absence of reflection noises of the transmission wavelength in the line and therefore mirror 13 will be reflective at all the wavelengths employed.

Conveniently, the mirror 13 can be obtained by plating the end of fiber 12 cut by cleavage or according to other known techniques adapted to create a reflective surface or area at the end of fiber 12 having the stated features.

The structure of the embodiment shown in Fig. 4 is particularly convenient both because it is completely made of optical fiber and therefore it is strong and irresponsive, in the course of time, to vibrations or deformations to which miniaturized focusing apparatus and the like could be subjected and because the combination of the insulating characteristics belonging to the demultiplexer and of the selective reflectivity belonging to the dichroic mirror offers a great freedom during the planning step in order to achieve the most appropriate result for the specific application, offering in particular the maximum reflection in the pumping wavelength, whereas the reflection is minimum in the transmission wavelength.

An amplification unit in accordance with the invention has been accomplished following the diagram shown in Fig. 4 and an amplification unit devoid of the reflection member according to the diagram of Fig. 1 has been accomplished for comparison.

In both embodiments it has been used a transmission line having a signal of 1536-nm wavelength s and a pumping laser diode 3 of 10 mW-power and 980 nm-wavelength p.

A 980-to-1536-nm optical multiplexer or coupler 2 has been used with 90% coupling at 980 nm and 15 dB-insulation.

In both tests a step index-type Si/Ge active fiber 6 has been used, doped with Er³⁺ ions.

In the amplification unit in accordance with the diagram of Fig. 1 a 9 m-length of active fiber has been used, whereas in the amplification unit in accordance with the diagram of Fig. 3 the active fiber had a length of 7 m.

In the amplifier of Fig. 4 the 980-to-1536-nm demultiplexer 9 had a 90% coupling at 980 nm and a 90% coupling at 1536 nm; there was a 30 dB isolation on both the outgoing branches.

The mirror 13 has been obtained by gilding of the end of the demultiplexer fiber 11.

The configuration shown in Fig. 1 with a 9 m length of active fiber has given a 20 dB gain G₁, with a noise figure defined as (S/N)ᵢ/(S/N)ₒ = 5 dB.

The configuration shown in Fig. 3 with a 7 m length of active fiber has given a 20 dB gain G₂, that is a gain identical to the preceding one, with a noise figure defined as (S/N)ᵢ/(S/N)ₒ = 3 dB, which means a reduction of 1.5 dB in the noise figure.

Consequently an important improvement has been reached in the quality of the transmitted signal, by virtue of the lower noise introduced into the transmission line from the amplifier in accordance with the invention.

In addition the presence of the demultiplexer 9 allows the pumping wavelength to be eliminated from the line 7, which avoids filters or similar devices being used.

By virtue of the inventive amplifier it is possible to achieve an improved responsiveness in the receiving apparatus without an increase in the pumping power being required for the purpose, which would involve the use of stronger laser diodes or of two coupled diodes, the former being not always available and having high costs and the latter being greatly subjected to damages and failures.

More generally, with the amplifier in accordance with the invention, depending upon the particular requirements of each specific application, it is possible either to improve the noise figure in the transmission, under the same power, or to reach a higher gain, the applied pumping power being the same or, without modifying the achieved gain, to use a pumping light source having a lower power.

While the invention has been described in connection with optical preamplifiers, it must not be intended as limited to the latter, since it can be also applied to line amplifiers and similar apparatus in which it is convenient to reach a high pumping power level over the whole length of the optical fiber used.

## Claims

1. An optical amplifer of the active fiber type, adapted to be connected to an optical fiber (1) in an optical telecommunication system, which amplifier (2) comprises a portion of active optical fiber (4) containing a laser emitting substance (3), susceptible of being connected to the optical telecommunication fiber (1) and receiving light therefrom at the transmission wavelength, further fed from a light source at a pumping wavelength lower than the transmission one, which pumping light can be absorbed in the active fiber (6), characterized in that the active fiber (6) has a length corresponding to a partial absorption of the directly-input pumping light and in that downstream of the active fiber (6) a selective mirror element (8) is present which reflects the light at the pumping wavelength and is transparent to the light at the transmission wavelength.

2. An optical amplifier according to claim 1, characterized in that the mirror element (8) has a reflectivity within the active fiber lower than -40 dB at the transmission wavelength and higher than - 10 dB at the pumping wavelength.

3. An optical amplifier according to claim 1, characterized in that the mirror element (8) consists of discrete components comprising a dichroic mirror and two focusing groups respectively adapted to send light from the active fiber to the dichroic mirror and from the dichroic mirror to the optical telecommunication fiber.

4. An optical amplifier according to claim 1, characterized in that the mirror element consists of one or more monolithic optical fiber elements.

5. An optical amplifier according to claim 4, characterized in that the mirror element (8) consists of an optical demultiplexer (9) having an input fiber (10) connected to the end of the active fiber (6) and adapted to receive the transmission wavelength and the pumping wavelength multiplexed in a single fiber, and two output fibers (11, 12), the demultiplexer being adapted to separate the transmission wavelength on one of the output fibers and the pumping wavelength on the other output fiber, the output - fiber (11) carrying the transmission wavelength being connected to the telecommunication fiber (7) and the output fiber (12) carrying the pumping wavelength being provided, at the end thereof, with a mirror (13) adapted to reflect at least the pumping wavelength.

6. An optical amplifier according to claim 5, characterized in that the mirror (8) is a dichroic mirror having a reflectivity lower than -2 dB at the signal wavelength and a reflectivity higher than -5 dB at the pumping wavelength.

7. An optical amplifier according to claim 5, characterized in that the demultiplexer (9) has an isolation higher than -10 dB between the transmission and pumping wavelengths.

## Patentansprüche

1. Optischer Verstärker des Aktivfasertyps, der an eine optische Faser (1) in einem optischen Fernübertragungssystem geschaltet werden kann, wobei der Verstärker (2) einen optischen Aktivfaserteil (4) aufweist, der eine Laseremittiersubstanz (3) enthält und mit der optischen Fernübertragungsfaser (1) verbunden werden kann und Licht von dieser mit der Übertragungswellenlänge empfängt und weiterhin gespeist ist von einer Lichtquelle mit einer Pumpwellenlänge, die kürzer als die Übertragungswellenlänge ist, wobei das Pumplicht in der aktiven Faser (6) absorbiert werden kann,
**dadurch gekennzeichnet**, daß die aktive Faser (6) eine Länge hat entsprechend einer Teilabsorption des Direkteingang-Pumplichts, und daß stromabwärts der aktiven Faser (6) ein auswählendes Spiegelelement (8) vorhanden ist, welches das Licht mit der Pumpwellenlänge reflektiert und für das Licht mit der Übertragungswellenlänge transparent ist.

2. Optischer Verstärker nach Anspruch 1, dadurch gekennzeichnet, daß das Spiegelelement (8) ein Reflexionsvermögen in der aktiven Faser hat, welches kleiner als -40 dB bei der Übertragungswellenlänge, und höher als -10 dB bei der Pumpwellenlänge ist.

3. Optischer Verstärker nach Anspruch 1, dadurch gekennzeichnet, daß das Spiegelelement (8) aus diskreten Komponenten besteht, umfassend einen dichroitischen Spiegel und zwei Fokussiergruppen, die Licht von der aktiven Faser zu dem dichroitischen Spiegel und von dem dichroitischen Spiegel zu der optischen Fernübertragungsfaser senden können.

4. Optischer Verstärker nach Anspruch 1, dadurch gekennzeichnet, daß die Spiegelelemente aus einem oder mehreren monolithischen faseroptischen Elementen besteht.

5. Optischer Verstärker nach Anspruch 4, dadurch gekennzeichnet, daß das Spiegelelement (8) aus einem optischen Demultiplexer (9), der eine Eingangsfaser (10) hat, welche mit dem Ende der aktiven Faser (6) verbunden und in der Lage ist, die Übertragungswellenlänge und die Pumpwellenlänge, die in einer einzigen Faser multiplext sind, zu empfangen und zwei Ausgangsfasern (11,12) hat, wobei der Demultiplexer in der Lage ist, die Übertragungswellenlänge auf einer der Ausgangsfasern, und die Pumpwellenlänge auf der anderen Ausgangsfaser zu trennen, die Ausgangsfaser (11), welche die Übertragungswellenlänge führt, mit der Fernübertragungsfaser (7) verbunden ist, und die die Pumpwellenlänge führende Ausgangsfaser (12) an ihrem Ende mit einem Spiegel (13) versehen ist, der wenigstens die Pumpwellenlänge reflektieren kann.

6. Optischer Verstärker nach Anspruch 5, dadurch gekennzeichnet, daß der Spiegel (8) ein dichroitischer Spiegel ist, der ein Reflexionsvermögen von kleiner als -2 dB bei der Signalwellenlänge, und ein Reflexionsvermögen höher als -5 dB bei der Pumpwellenlänge hat.

7. Optischer Verstärker nach Anspruch 5, dadurch gekennzeichnet, daß der Demultiplexer (9) eine Trennung zwischen der Übertragungswellenlänge und der Pumpwellenlänge von höher als -10dB hat.

## Revendications

1. Un amplificateur optique du type à fibre active, apte à être relié à une fibre optique (1) dans un système de télécommunications optiques, amplificateur (2) qui comprend une partie de fibre optique active (4) contenant une substance émettrice (3) de laser, susceptible d'être reliée à la fibre (1) de télécommunications optiques et d'en recevoir une lumière à la longueur d'onde de transmission, alimentée en outre par une source lumineuse à une longueur d'onde de pompage inférieure à la longueur d'onde de transmission, lumière de pompage qui peut être absorbée dans la fibre active (6), caractérisé en ce que la longueur de la fibre active (6) correspond à une absorption partielle de la lumière de pompage entrée directement, et en ce qu'un élément de miroir sélectif (8) qui réfléchit la lumière à la longueur d'onde de pompage et est transparent à la lumière à la longueur d'onde de transmission, est présent en aval de la fibre active (6).

2. Un amplificateur optique selon la revendication 1, caractérisé en ce que la réflectivité de l'élément de miroir (3) à l'intérieur de la fibre active est inférieure à - 40 dB à la longueur d'onde de transmission et supérieure à - 10 dB à la longueur d'onde de pompage.

3. un amplificateur optique selon la revendication 1, caractérisé en ce que l'élément de miroir (8) consiste en composants discrets comprenant un miroir dichroïque et deux groupes focalisants respectivement adaptés à envoyer une lumière de la fibre active vers le miroir dichroïque et du miroir dichroïque vers la fibre de télécommunications optiques.

4. Un amplificateur optique selon la revendication 1, caractérisé en ce que l'élément de miroir consiste en un ou plusieurs éléments monolithiques de fibre optique.

5. Un amplificateur optique selon la revendication 4, caractérisé en ce que l'élément de miroir consiste en un démultiplexeur optique (9) dont une fibre d'entrée (10) est reliée à l'extrémité de la fibre active (10) et est apte à recevoir la longueur d'onde de transmission et la longueur d'onde de pompage multiplexées dans une fibre unique, et deux fibres de sortie (11, 12), le démultiplexeur étant apte à séparer la longueur d'onde de transmission, sur l'une des fibres de sortie, et la longueur d'onde de pompage, sur l'autre fibre de sortie, la fibre de sortie (11) portant la longueur de transmission étant reliée à la fibre (7) de télécommunication et la fibre de sortie (12) portant la longueur d'onde de pompage étant pourvue, à son extrémité, d'un miroir (13) apte à réfléchir au moins la longueur d'onde de pompage.

6. Un amplificateur optique selon la revendication 5, caractérisé en ce que le miroir (8) est un miroir dichroïque dont la réflectivité est inférieure à - 2 dB à la longueur d'onde de signal et dont la réflectivité est supérieure à -5 dB à la longueur d'onde de pompage.

7. Un amplificateur optique selon la revendication 5, caractérisé en ce que l'isolation du démultiplexeur (9) est supérieur à - 10 dB entre les longueurs d'onde de transmission et de pompage.
